# EUROPEAN PATENT APPLICATION

(11) **EP 1 701 081 A1**
(43) Date of publication of application: **13.09.2006**
(21) Application number: 06110644.9
(22) Date of filing: 03.03.2006
(51) Int. Cl.: F16L 47/04

(54) **Ring particularly for mutually connecting pipes or elements of sanitary elements**

(30) Priority: 08.03.2005 IT TV20050037
(71) Applicant: Fisc Italiana S.r.l., 31015 Conegliano TV (IT)
(72) Inventor: Costa, Luigino, 35026, Conselve PD (IT); Da Col, Giovannigiacomo, 35037, Teolo PD (IT); Marcon, Federico, 31015, Conegliano TV (IT)
(74) Representative: Modiano, Micaela Nadia

(57) **Abstract**

A ring particularly for mutually locking pipes and/or connecting elements and/or drains and/or siphons of sinks and sanitary fixtures. An annular seat (9) is formed on the internal lateral surface (7) of the ring (1) and an approximately complementarily shaped annular ridge (12) is rotatably associated with the seat (9) and protrudes from the external lateral surface (13) of a substantially frustum-shaped annular gasket (14).

## Description

The present invention relates to a ring particularly for mutually fastening plumbing equipment, such as pipes and/or connecting elements and/or drains and/or siphons of sinks and sanitary fixtures.

The pipes of sinks and sanitary fixtures are currently interconnected and fixed to each other and/or to other elements, such as for example drains and siphons, by using rings.

Such rings are constituted typically by a tubular body, made of plastics or metal, which has a thread on its internal surface; an angular protrusion protrudes from the internal surface of said tubular body toward its interior and approximately at a first perimetric rim thereof.

A substantially frustum-shaped annular gasket made of plastic material can be arranged inside said tubular body and can be positioned within the ring, engaging with said annular protrusion its perimetric rim located at its larger end face.

The ring and the gasket may be associated with a first end, which is conveniently threaded complementarily with respect to said ring, of a first pipe or of another element to be connected to a pipe, such as for example a drain or a siphon; said first end is inserted in the ring on the opposite side with respect to where the annular protrusion is located, and is arranged between the internal surface of the ring and the external inclined surface of the gasket.

A second end of a second pipe or of another element to be joined to the first pipe can be inserted, by passing through the ring of the gasket, in the first end of the first pipe or other element.

By screwing the ring on the thread provided on the first end of the first pipe or other element, such ring advances longitudinally with respect to said first pipe, drawing the gasket in the same direction by means of the thrust applied thereto by the annular protrusion; because of the inclination of the external surface of the gasket, as said gasket advances longitudinally with respect to the first pipe, the first end of said pipe compresses said gasket radially toward the second pipe, thus mutually locking said first and second pipes.

The main drawback of these known types of ring is that the method for fixing the pipes or other elements to be joined requires the prior positioning of the gasket, and this requires a certain time to accomplish but in particular requires a certain attention on the part of the operator, who must remember to insert said gasket in the ring and must take care to position it accurately.

Another drawback of known types is that the gaskets have limited dimensions and weights with respect to the rings, pipes and other elements to be joined thereto, and the likelihood of the operator losing said gaskets before they are applied to the respective rings is therefore high, thus forcing the operator to carry with him more gaskets than rings, with the consequent associated costs.

The aim of the present invention is to solve the above-mentioned problems, eliminating the drawbacks of the cited background art, by providing a ring which allows to facilitate, quicken and improve its application to plumbing equipment, such as pipes or other elements to be joined, as it does not require the operator to pay particular attention in performing this operation.

Within this aim, an object is to provide a ring which eliminates the danger of the operator losing the gasket and therefore no longer requires the operator to be equipped with more gaskets than rings.

Another object is to provide a ring which is structurally simple and has low manufacturing costs.

This aim and these and other objects, which will become better apparent hereinafter, are achieved by a ring, particularly for mutually fastening plumbing equipment, such as pipes and/or connecting elements and/or drains and/or siphons of sinks and sanitary fixtures, characterized in that an annular seat is formed on the internal lateral surface of said ring, an approximately complementarily shaped annular ridge being rotatably associated with said seat and protruding from the external lateral surface of a substantially frustum-shaped annular gasket.

Further characteristics and advantages of the invention will become better apparent from the following detailed description of a particular but not exclusive embodiment thereof, illustrated by way of non-limiting example in the accompanying drawings, wherein:
Figure 1 is a sectional view, taken along a diametrical plane, of a ring according to the invention;
Figure 2 is a sectional view, taken along a diametrical plane, of a ring according to the invention, applied to an end of a first pipe, and of an end of a second pipe which can be associated with the first pipe;

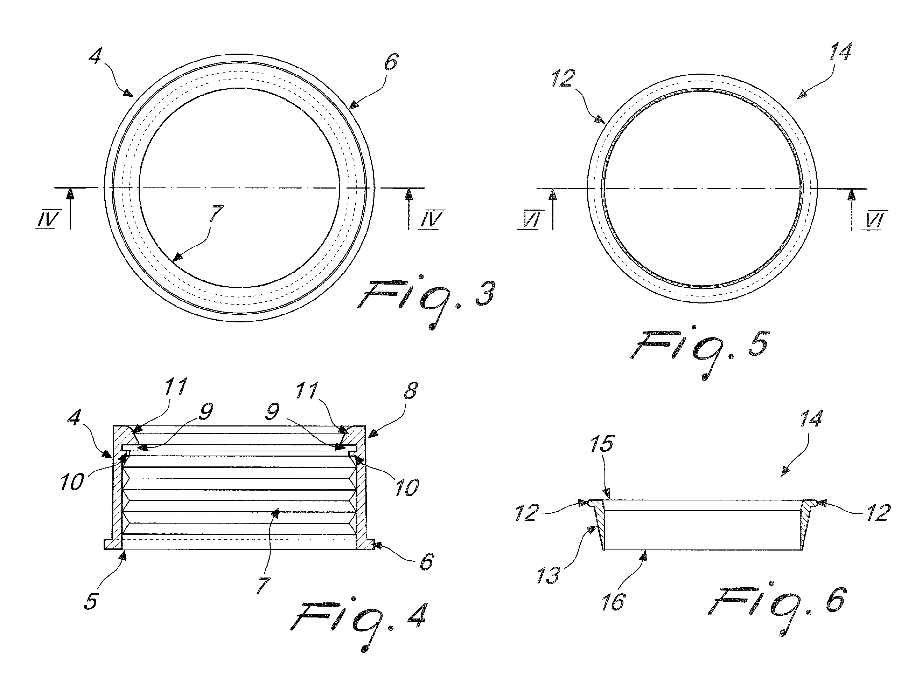

Figure 3 is a plan view of a ring according to the invention without the gasket;
Figure 4 is a sectional view, taken along the line IV-IV of Figure 3;
Figure 5 is a plan view of the gasket of a ring according to the invention;
Figure 6 is a sectional view, taken along the line VI-VI of Figure 5.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a ring, particularly for fastening a first pipe 2 to a second pipe 3 or to an element, such as for example a drain or a siphon, not shown in the figures.

The ring 1 is constituted by a hollow tubular element 4, which is made of plastics or metal and has such dimensions as to allow the first pipe 2 and the second pipe 3 to pass inside it once they have been arranged coaxially to each other.

A circumferential tab 6 protrudes approximately radially from the lower perimetric rim 5 of the tubular element 4 toward the outside of said tubular element.

The tubular element 4 has a first thread on its internal lateral surface 7.

An annular seat 9 is formed at the internal lateral surface 7 of the tubular element 4, approximately proximate to the upper end 8 thereof, which is located opposite the lower perimetric rim 5.

Advantageously, the annular seat 9 can be formed, for example, by a slot which is provided in the internal lateral surface 7 of the tubular element 4 or, as in the exemplary embodiment shown in the accompanying figures, the annular seat 9 can be formed between a lower annular protrusion 10 and an upper annular protrusion 11, both of which protrude radially from the internal lateral surface 7 of the tubular element 4, approximately at the upper end 8 thereof.

Advantageously, the lower annular protrusion 10 and the upper annular protrusion 11 can be arranged, as in the example shown in the accompanying figures, along a continuous circumference region, or can be divided into a plurality of portions of selected dimensions, which are mutually separated and are arranged along a circumference region of the internal lateral surface 7.

A complementarily shaped annular ridge 12 is associated rotatably with the annular seat 9 and protrudes radially with respect to the external lateral surface 13 of an annular gasket 14, which is substantially frustum-shaped (i.e. with the geometrical tolerances known in the pertinent technical field) so that its vertex is directed away from the annular ridge 12.

By way of the sliding engagement of the annular ridge 12 in the annular seat 9, the gasket 14 and the tubular element 4 can rotate with respect to each other relative to the same axis.

The gasket 14 has an inside diameter which is substantially constant and is such as to allow the second pipe 2 to pass inside it; the outside diameter of the gasket 14 instead decreases gradually in the direction away from the annular ridge 12, so that the external lateral surface 13 of the gasket 14 is inclined.

The annular ridge 12 protrudes from the external lateral surface 13 of the gasket 14 approximately at its upper perimetric rim 15; the lower end 16 of the gasket 14 is shaped like a lip and during use is directed downward and toward the lower perimetric rim 5 of the tubular element 4.

The gasket 14 is advantageously made of plastic material and can be provided for example as an independent element and then be associated with the tubular element 4 by inserting by pushing the annular ridge 12 in the annular seat 9 of the tubular element 4.

As an alternative, if the tubular element 2 is made of plastic material, the gasket 14 can be coinjected on the upper end 8 of the tubular element 4 so that the annular ridge 12 is inserted rotatably within the annular seat 9; by using for the tubular element 4 and for the gasket 14 two distinct plastic materials which do not become fixed to each other , i.e. remain unstuck, as they cure, it is possible to obtain, directly during molding, a tubular element 4 with the gasket 14 already associated therewith.

The ring 1, therefore, can be used to mutually connect, for example, a first end 17 of the first pipe 2 and a second end 18 of the second pipe 3, which is conveniently threaded complementarily with respect to the thread provided on the internal lateral surface 7 of the tubular element 4.

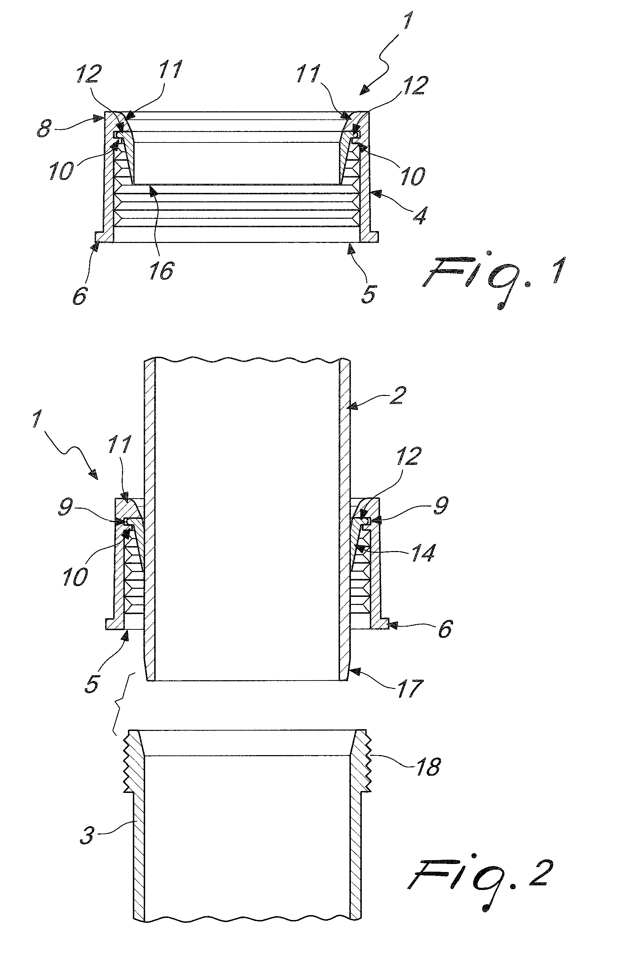

Operation is therefore as follows: with reference to Figure 2, the first end 17 of the first pipe 2 is inserted in the gasket 14 of a ring 1, so as to protrude from the lower perimetric rim 5 of the tubular element 4; the first end 17 is then inserted coaxially in the second end 18 of the second pipe 3.

By pushing the gasket 1 toward the second end 18 until the thread of the tubular element 4 makes contact with the thread provided in the end 18, and by turning the tubular element 4, the ring 1 advances further toward the second pipe 3 and the second end 18 of said second pipe is arranged between the internal lateral surface 7 of the tubular element 4 and the external lateral surface 13 of the gasket 14, making contact with the latter.

As the ring 1 advances toward the second end 18, said ring compresses radially the gasket 14 toward the first pipe 2, thus rigidly coupling by friction the gasket 14 to the first pipe 2 and to the second pipe 3.

By means of the rotary engagement of the gasket 14 with the tubular element 4, said tubular element can continue to rotate with respect to the gasket 14 and therefore with respect to the first pipe 2 and to the second pipe 3 rigidly coupled thereto, thus allowing to increase the pressure between the second end 18, the gasket 14 and the first pipe 2 and thus increase the locking between the first pipe 2 and the second pipe 3.

It has thus been found that the invention has achieved the intended aim and objects, a ring particularly for mutually locking pipes and/or connecting elements and/or drains and/or siphons of sinks and sanitary fixtures having been provided which, by having a built-in gasket, does not require the operator to remember to insert said gasket or to position it accurately, and therefore allows to facilitate, quicken and improve its application to said pipes and/or connecting elements and/or drains and/or siphons, consequently reducing the time and costs entailed for its installation.

Further, the ring according to the invention, by having the gasket built into the tubular element, eliminates the risk that the operator might lose the gasket.

The terms "upper" and "lower" as herein used, refer only to the position of the elements to which they refer, as shown for illustrative purposes only in the drawings, and are not understood as having any limiting effect with respect to the scope of the invention as claimed.

Moreover, the production costs of the ring according to the invention remain low, since it is constituted only by components which are easily available or simple to manufacture and assemble.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or alike may also be omitted or be replaced with equivalents.

The disclosures in Italian Patent Application No. TV2005A000037 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ring, particularly for mutually fastening pipes and/or connecting elements and/or drains and/or siphons of sinks and sanitary fixtures, **characterized in that** an annular seat (9) is formed on the internal lateral surface (7) of the ring (1), a complementarily shaped annular ridge (12) being rotatably associated with said seat (9) and protruding from the external lateral surface (13) of a substantially frustum-shaped annular gasket (14).

2. The ring according to claim 1, constituted by a hollow tubular element (4), **characterized in that** said annular seat (9) is formed proximate to the upper end (8) of said tubular element (4).

3. The ring according to claims 1 and 2, **characterized in that** said annular seat (9) is formed by a slot formed in said internal lateral surface (7) of said tubular element (4).

4. The ring according to claims 1 and 2, **characterized in that** said annular seat (9) is formed between a lower annular protrusion (10) and an upper annular protrusion (11), both of which protrude radially from said internal lateral surface (7) of said tubular element (4) at said upper end (8) thereof.

5. The ring according to claims 1 and 4, **characterized in that** said lower annular protrusion (10) and said upper annular protrusion (11) are arranged along a continuous circumference.

6. The ring according to claims 1 and 4, **characterized in that** said lower annular protrusion (10) and said upper annular protrusion (11) are divided into a plurality of portions having selected dimensions, which are mutually separated and are arranged along a circumference.

7. The ring according to one or more of the preceding claims, **characterized in that** said annular ridge (12) protrudes from said external lateral surface (13) of said gasket (14) at the upper perimetric rim (15) thereof, the lower end (16) of said gasket (14) being lip-shaped and being directed, during use, inward and toward the lower perimetric rim (5) of said tubular element (4).

8. The ring according to one or more of the preceding claims, **characterized in that** said gasket (14) is provided as an independent element and can be associated with said tubular element (4) by inserting said annular ridge (12) into said annular seat (9) by pressing.

9. The ring according to one or more of the preceding claims, wherein said tubular element (4) is made of plastic material, **characterized in that** said gasket (14) is coinjected over said upper end (8) of said tubular element (4), so that said annular ridge (12) is inserted rotatably within said annular seat (9), said tubular element (4) and said gasket (14) being made of two distinct plastic materials which do not become fixed to each other when they cure.
